# FASCICULE DE BREVET EUROPEEN

(11) **EP 2 268 482 B1**
(45) Date de publication et mention de la délivrance du brevet: **28.02.2018**
(21) Numéro de dépôt: 09745978.8
(22) Date de dépôt: 22.04.2009
(51) Int. Cl.: B32B 3/20

(54) **PEAU AMORTISSANTE DE PROTECTION DE PIECES COMPOSITES**
DÄMPFUNGSHÜLLE ZUM SCHUTZ VON VERBUNDTEILEN
DAMPING SKIN FOR PROTECTING COMPOSITE PARTS

(30) Priorité: 24.04.2008 FR 0852770; 17.07.2008 FR 0854872
(43) Date de publication de la demande: 05.01.2011
(73) Titulaire: SKF Aerospace France, 26240 Saint-Vallier (FR)
(72) Inventeur: BRIAN, Jean-Luc, F-82800 Montricoux (FR); FASCIO, Valia, F-82000 Montauban (FR); VIE, Philippe, F-31500 Toulouse (FR); VALEMBOIS, Guy, F-31400 Toulouse (FR)
(74) Mandataire: Rhein, Alain
(86) Numéro de dépôt international: PCT/FR2009/050746
(87) Numéro de publication internationale: WO 2009/138659

(56) Documents cités:
- FR-A- 2 505 730
- FR-A- 2 585 445
- GB-A- 1 070 874
- DATABASE WPI Week 200525 Thomson Scientific, London, GB; AN 2005-236259 XP002512578 & JP 2005 054976 A (KODAMA Y) 3 mars 2005 (2005-03-03)

## Description

La présente invention a pour objet une peau amortissante de protection de pièces composites.

Dans le domaine aéronautique, les matériaux composites tendent de plus en plus à remplacer les matériaux métalliques, car ils permettent un allègement des structures pour des performances mécaniques égales ou supérieures. Au cours de ces dernières années, un effort important a été fait pour prolonger la durée de vie des structures composites et anticiper leur endommagement.

A cet effet on utilise des matériaux à haute performance tels que le carbone associé avec un liant. Toutefois, lors de l'impact d'un projectile sur une structure composite, ou lors d'un choc, l'énergie apportée par l'impact ou le choc sur la pièce composite est dissipée par un endommagement microscopique de la pièce. Ceci se traduit par une microfissuration de la matrice, une rupture des fibres ou un délaminage des plis. Ainsi qu'il soit de forte ou de faible énergie, tout impact sur un composite est important car il peut entraîner l'apparition de délaminages internes qui peuvent ensuite se propager sous sollicitation cyclique et mener à la ruine de la pièce. Afin d'éviter les conséquences de tels chocs, les structures sont surdimensionnées de telle manière à anticiper les conséquences des chocs mécaniques. De ce fait l'avantage de légèreté des matériaux composites est considérablement réduit.

La résistance aux impacts et aux chocs est une propriété que l'on peut ajuster suivant les exigences mécaniques et/ou économiques de l'application finale. Des matériaux composites à base de fibres en polymère d'aramide, qui présentent une excellente résistance aux impacts combinée à de bonnes performances mécaniques, ou de fibres de verres peuvent ainsi être utilisés pour améliorer la résistance à l'impact.

La peau amortissante selon l'invention a pour but de protéger des structures composites contre les impacts de projectile, des gravillons par exemple, ou de chocs, avec des volatiles dans le domaine aéronautique par exemple, tout en offrant les avantages suivants, une mise en oeuvre aisée à la fabrication, même pour les pièces de formes complexes, une capacité d'absorption des chocs mécaniques significatifs sans altération du substrat, une qualification des pièces aux contraintes aéronautiques, une visualisation des effets de l'impact et une simplification des opérations de maintenance.

Dans ce but, la présente invention utilise les propriétés connues de sphères creuses, mises en oeuvre dans la fabrication d'absorbeurs de choc, ou de matériaux alvéolaires.

On connaît ainsi, par le document FR 2 585 445 au nom de l'une des Demanderesses, un matériau composite modulaire, de faible poids spécifique tout en présentant de bonnes caractéristiques mécaniques, et qui est constitué d'une pluralité de billes creuses géométriquement agencées selon une répartition proche de la répartition de type cristallographique compact, et fixées les unes aux autres exclusivement par leurs zones de contact.

On connaît, par le document FR 2 615 787 également au nom de l'une des Demanderesses, un produit modulaire ainsi que plusieurs procédés de fabrication, constitué de la juxtaposition de billes creuses selon un arrangement plan à une seule couche de type cristallographique, et liées les unes aux autres au voisinage de leurs zones de contact par des ménisques constitués d'un liant souple, pour former une nappe qui présente de bonnes caractéristiques mécaniques combinées à un faible poids spécifique.

On connaît également, par le document GB 1 070 874, un matériau alvéolaire volumique formé par un ensemble de billes fixées les unes aux autres, dans le but d'obtenir un matériau de poids réduits.

Tous ces matériaux composites, quel que soit le document précité considéré, présentent des caractéristiques intéressantes de résistance mécanique et de légèreté leur permettant notamment de constituer une alternative avantageuse aux matériaux à structure nid d'abeille, toutefois ils ne permettent pas de remédier au problème de la protection d'une pièce en matériau composite.

En effet, en cas d'impact sur des pièces fabriquées selon les procédés décrits dans ces documents, c'est la structure elle-même de ces pièces qui peut être altérée, en sorte qu'une réparation peut ne pas être possible, et que pour remédier à cet inconvénient il n'y aurait que le surdimensionnement de la pièce avec les inconvénients que cela génère comme cela a déjà été évoqué.

On connaît, par le document FR 2 505 730, un matériau composite d'amortissement de chocs et impacts constitué par au moins deux couches superposées qui comprennent chacune des éléments sensiblement hémisphériques creux, juxtaposés par leur base sur un support déformable. La peau amortissante de protection de pièces composites selon l'invention, se caractérise essentiellement en ce qu'elle consiste en un matériau composite comprenant au moins deux couches superposées, à savoir une première couche constituée d'une juxtaposition de sphères creuses destinée à être appliquée et fixée, directement ou indirectement, à la surface de la pièce à protéger, et une seconde couche, recouvrant la première, et constituée d'une paroi réalisée dans un matériau ayant des propriétés de déformation plastique.

Selon une caractéristique additionnelle de la peau amortissante selon l'invention, la première couche est constituée de la superposition de plusieurs couches, chacune constituée de la juxtaposition de sphères creuses, chacune de ces couches de sphères creuses étant ou non séparées de la ou des autres couches de sphères creuses par une paroi intermédiaire.

On notera que chacune des couches de sphères creuses, peut être analogue au matériau modulaire, en forme de nappe, décrit dans le document FR 2 615 787, et réalisé selon l'un ou l'autre, des procédés décrits dans ledit document, ou bien selon un autre procédé.

On notera également qu'une nappe de ce matériau modulaire décrit dans ledit document ne pourrait pas suffire à elle seule à assurer la protection d'une pièce composite qu'elle recouvrirait. En effet, selon l'invention, c'est l'association d'au moins une couche de sphères creuses et d'une paroi réalisée dans un matériau ayant des propriétés de déformation plastique, qui permet de résoudre le problème posé. Ainsi, lors d'un impact ou d'un choc, la paroi extérieure permet, par sa déformation, de diffuser l'énergie de l'impact en sorte de la transmettre à un grand nombre de sphères creuses, lesquelles vont l'absorber.

Selon l'invention, la première couche de la peau amortissante selon l'invention peut être fixée indirectement sur la pièce à protéger, par l'intermédiaire d'une troisième couche, sur un côté de laquelle est fixée la première couche constituée de sphères creuses, tandis que son autre côté comporte des moyens de solidarisation permettant sa fixation, et donc celle de la peau amortissante, sur la surface à protéger, moyens de solidarisation qui peuvent être prévus réversibles si, par exemple, la fixation doit être temporaire.

La première couche, directement ou indirectement collée sur le substrat à protéger, a pour but d'absorber l'énergie issu de l'impact, et dispersé par la paroi extérieure, en s'écrasant sans altérer le substrat. Cette couche facilite également la maîtrise de l'écartement entre le substrat et la seconde couche tout en permettant une mise en forme aisée quelle que soit la géométrie de la pièce en composite à protéger.

Cette couche a une tenue mécanique suffisante pour assurer la cohésion entre les deux couches, mais est suffisamment fragile pour ne pas altérer le substrat lors de son écrasement sous l'effet d'un impact.

Il est donc important de bien dimensionner les sphères creuses, l'épaisseur de leur coque par exemple, en fonction bien entendu du matériau dont elles sont faites, afin que celles-ci soient écrasées, au moins localement, lors de l'impact afin de protéger la structure composite sur laquelle la peau est fixée.

Au-delà de la protection de la structure, la peau amortissante selon l'invention est un indicateur de l'état de la structure composite après impact.

En effet, il est possible d'ajuster la capacité d'absorption d'énergie de la peau amortissante en jouant sur l'épaisseur de l'âme en sphères creuses, sur les propriétés intrinsèques des sphères creuses ou sur le panachage des diamètres des sphères creuses. Cette association des sphères creuses et de la seconde couche permet de créer une protection efficace des composites contre les impacts de gravillons, notamment, ou les chocs avec des objets.

L'utilisation de sphères creuses présente de nombreux avantages. Outre leur résistance à l'impact, les sphères creuses offrent une certaine légèreté. Elles peuvent être en métal ou en matières synthétiques (polymère, céramique ou élastomère par exemple) ou minérales.

Les sphères creuses ont des diamètres variant de préférence de 1 à 6 mm. Elles peuvent avoir toutes le même diamètre ou non. Le diamètre des sphères définit la distance entre la seconde couche et le substrat. Cette épaisseur contrôlée de la couche de sphères creuses est à ajuster suivant les applications pour garantir la non détérioration du substrat lors des impacts.

La gamme de diamètre des sphères creuses de 1 à 6 mm permet d'envisager l'utilisation de la peau amortissante dans des zones de forte courbure. Il est donc possible avec la peau selon l'invention d'épouser les formes les plus complexes.

Un autre avantage de l'invention est sa faible sensibilité à l'angle d'impact. En effet, le volume de sphères creuses étant isotropes, ses performances en terme d'absorption d'énergie ne seront pas conditionnées par l'angle d'impact. Ce n'est pas le cas de solutions à base de nid d'abeille, qui ont tendance à s'effondrer pour des angles d'impact élevés.

Les sphères creuses sont assemblées entre elles, et éventuellement aux parois ou surfaces avec lesquelles elles sont en contact, par collage en utilisant une résine structurale polymérisée par exemple, ou par tout autre technique qui permet de les lier. La quantité de résine enrobant les sphères est contrôlée et se présente dans un mode de réalisation sous forme de ménisque limité aux différents points de contact. Cette résine a une triple fonction ; elle permet non seulement d'assurer la cohésion des sphères creuses entre elles mais également la liaison entre les couches, la cohésion des sphères creuses avec le substrat et la seconde couche.

On notera que selon une variante, l'espace qui demeure entre les sphères creuses et la deuxième couche ou la paroi intermédiaire, et l'objet à protéger ou la troisième couche, est comblé au moyen d'un matériau compressible, d'une résistance à la compression inférieure à celle des sphères creuses qu'il enserre, une mousse ou un élastomère par exemple.

En ce qui concerne la deuxième couche, ou paroi extérieure, il s'agit de préférence d'une couche de matériau ayant une grande capacité de déformation plastique. Sa déformation ou sa résistance au déchirement permet de transformer l'énergie du choc en déformation locale. Dans un mode de fabrication, cette seconde couche peut être réalisée en des tissus d'aramide stratifiés entre eux. Le nombre de couches de tissu, leur épaisseur et leur texture seront à choisir en fonction du type d'impact à subir.

Une partie de l'énergie, de préférence le maximum, de l'impact est absorbée par la peau bi-composant sphères creuses/seconde couche, ce qui permet d'éviter le délaminage de la structure composite sur laquelle la peau amortissante est appliquée.

Dans un mode de réalisation, cette seconde couche est en polymère d'aramide, type Kevlar par exemple. L'utilisation d'une couche à base d'Aramide permet la transformation de l'énergie de l'impact (phénomène local) en une déformation plastique de cette peau. Ainsi une partie du volume de sphères creuses est écrasée et la zone finalement affectée par l'impact est une zone plus étendue que la zone d'impact initiale.

Dans un autre mode de réalisation, la deuxième couche, ou paroi extérieure, consiste en un matériau composite incorporant des composants qui lui confèrent des propriétés particulières d'isolation et/ou de conductibilité selon l'utilisation de la peau amortissante. Ainsi, de manière non limitative, cette deuxième couche ou paroi extérieure peut présenter une certaine résistance à la chaleur, ou bien être conductrice électriquement.

La peau amortissante selon l'invention facilite la maintenance des pièces après impact. En effet, l'expertise simple de la profondeur de la zone impactée permet de conclure à la dégradation ou non du substrat sous la zone d'impact.

En effet, dans le cas d'un impact, la seconde couche, ou paroi extérieure, est altérée, et cette rupture locale, ou la déformation plastique de la seconde couche, permet la visualisation nette de la zone d'impact.

En outre, suite à l'impact, si la, ou les, couche de sphères creuses est endommagée, il est visuellement possible pour un opérateur de maintenance de vérifier si la structure composite est abîmée et éventuellement de remplacer, du moins localement, les sphères creuses et la seconde couche détruites lors de l'impact.

Après impact, la maintenance de la pièce impactée est facilitée par la présence des deux couches de nature très différentes.

La première couche est fragile alors que la seconde possède une résistance mécanique significative. La seconde couche peut être partiellement enlevée grâce à un outil de type défonceuse, dont la fraise ne déborde pas plus que l'épaisseur des sphères. On garantit ainsi que l'outil coupant électroportatif ne touche pas le substrat.

Le grattage avec des outils manuels permet de supprimer les sphères creuses déformées, et le curetage ainsi réalisé permet la reconstruction de la paroi par collage des sphères creuses manquantes et pose d'une seconde couche.

La peau amortissante n'est pas forcément pénalisante en terme de masse du fait du faible poids des sphères creuses et de la couche extérieure.

De façon plus générale et plus particulièrement pour des applications dans le domaine aéronautique, la peau amortissante selon l'invention peut permettre le redimensionnement des pièces en composite qu'elle protège. Ces pièces étant actuellement surdimensionnées afin de continuer à remplir leur fonction après impact.

La présente invention peut être appliquée, non limitativement, dans le domaine aéronautique, avantageusement pour absorber les impacts de projectiles notamment de gravillons ou volatiles, sur des pièces composites d'aéronefs, train d'atterrissage par exemple, mais également sur d'autres pièces susceptibles d'être exposées à des impacts ou des chocs.

De manière avantageuse la peau amortissante peut être d'épaisseur variable selon la partie de la pièce considérée. En effet, certaines parties d'une pièce peuvent être plus exposées que d'autres, et nécessitent donc d'être mieux protégées.

Ainsi, non limitativement dans le domaine de l'aéronautique par exemple, les parties avant des pièces sont pratiquement les seules qui soient exposées, puisque les impacts susceptibles de créer des avaries ne se produisent pratiquement que lors des déplacements à partir d'une certaine vitesse. Il serait parfaitement possible de recouvrir en totalité une pièce exposée à des impacts, avec toutefois l'inconvénient, du fait du recouvrement des flancs de cette pièce qui ne sont que très peu exposés, d'augmenter la surface réellement exposée.

De préférence la peau amortissante selon l'invention présente des zones de différentes épaisseurs, ces variations d'épaisseur étant fonction du degré d'exposition à des impacts des parties de la pièce que ces zones doivent recouvrir. La variation d'épaisseur est réalisée essentiellement en faisant varier le nombre de couches de sphères creuses.

Les caractéristiques de la peau amortissante selon l'invention, ressortiront plus clairement de la description qui suit et qui se rapporte au dessin annexé, lequel en représente plusieurs modes de réalisation non limitatifs.

Dans le dessin annexé :
- la figure 1 représente une vue schématique en coupe d'une partie d'un objet recouvert d'une peau amortissante selon l'invention.
- la figure 2 représente une vue schématique en coupe d'une partie d'un objet recouvert d'une variante de la même peau amortissante.
- la figure 3 représente une vue schématique en coupe d'une partie d'un objet recouvert d'une autre variante de la même peau amortissante.
- la figure 4 représente une vue schématique en coupe d'un détail agrandi de la même peau amortissante.
- la figure 5 représente une vue schématique en coupe de la même partie d'un objet recouvert d'une peau amortissante, lors d'un impact.
- la figure 6 représente une vue schématique en coupe d'une partie d'un objet recouvert d'une autre variante de la même peau amortissante.

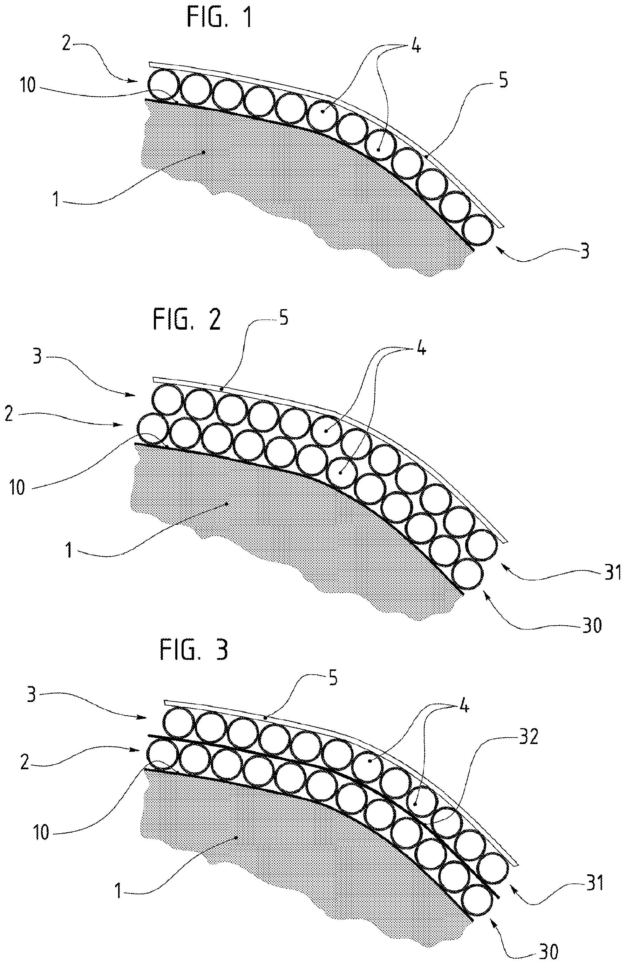

Sur la figure 1, on peut voir un objet 1, une pièce en matériau composite par exemple, dont la paroi extérieure 10 est recouverte d'une peau amortissante 2 selon l'invention.

Cette peau amortissante 2 est constituée de deux couches, une première couche 3 constituée de la juxtaposition de sphères creuses 4, fixées à la paroi 10, et une seconde couche 5, qui recouvre la première, et constituée d'un matériau ayant des propriétés de déformation plastique.

Les sphères creuses sont de type connu, déjà utilisées dans le domaine de absorbeurs de chocs par exemple, elles peuvent être réalisées dans différents matériaux, aussi bien en métal qu'en matières synthétiques.

La couche 5 consiste en une nappe qui peut être faite de différentes manières, en un tissu composite, ou en plusieurs tissus composites stratifiés entre eux, le nombre de tissu, ainsi que leur épaisseur et leur texture étant choisis selon l'utilisation de la peau.

Ces tissus sont préférentiellement, mais non limitativement, réalisés en polymère d'aramide.

Sur la figure 2, on peut voir que selon une variante, la première couche 3 est elle-même constituée de la superposition de deux couches 30 et 31 de sphères creuses 4.

Sur la figure 3, on peut voir que dans une autre variante, la première couche 3 est également constituée de la superposition de deux couches 30 et 31 de sphères creuses 4, et que ces deux couches 30 et 31 sont séparées par une paroi intermédiaire 32.

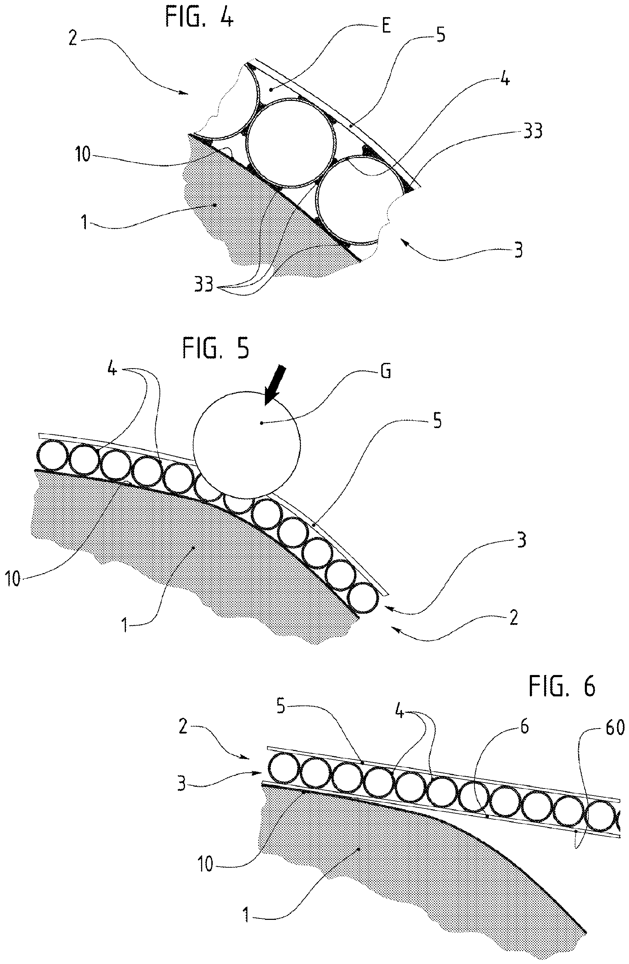

En référence à la figure 4, on peut voir que les sphères creuses 4 sont liées entre elles, et à la paroi 10 ainsi qu'à la seconde couche 5, par collage, au moyen de ponts 33 de résine par exemple. L'opération de collage est réalisée avec une quantité contrôlée de résine, en sorte que les ponts 33 soient localisés aux points de contact des sphères entre elles, et entre elles et la paroi 10 et la paroi 5, pour ne former que des ménisques, afin de ne recouvrir qu'une partie limitée des sphères 4, et ne pas en altérer les propriétés.

On notera que l'espace E, délimité par les parois 10 et 5, ainsi que par les sphères creuses 4, peut être laissé vide ou bien rempli d'un matériau compressible, d'une résistance à la compression inférieure à celle des sphères creuses 4, tel qu'une mousse ou un élastomère par exemple.

En référence maintenant à la figure 5, on peut voir l'effet d'un impact par un élément G, sur un objet 1 recouvert d'une peau amortissante 2.

On comprendra qu'il est aisé à un opérateur de maintenance, de détecter une zone d'impact et dévaluer l'importance des dégâts, puis de réparer la peau amortissante 2 en enlevant les sphères creuses 4 endommagées et en les remplaçant, puis en recouvrant d'une pièce de paroi 5.

En référence maintenant à la figure 6, on peut voir une peau amortissante 2 selon l'invention solidarisée indirectement à la paroi 10 par l'intermédiaire d'une paroi 6. La peau amortissante 2 comprend ainsi deux parois 5 et 6 entre lesquelles est placée une couche 3 de sphères creuses 4.

La paroi 6 peut présenter divers aspects, et être constituée de matériaux divers. Sa principale caractéristique consiste en ce que sa face 60, destinée à venir au contact de la paroi 10, est conçue apte à être solidarisée à cette dernière.

Cette solidarisation peut être réalisée par adhérence au travers de moyens de collage dont le pouvoir d'adhérence est plus ou moins important.

Dans le cas d'une faible adhérence, il est possible de réaliser une solidarisation réversible à volonté, permettant d'assurer la protection temporaire d'un objet.

La peau amortissante 2, comprenant une telle paroi 6, peut ainsi être conditionnée en feuilles, plaques, bandes etc, présentant éventuellement une certaine flexibilité, et dont la face 60 est enduite d'un produit adhésif.

## Revendications

1. Peau amortissante de protection de pièces composites, **caractérisée en ce qu'**elle consiste en un matériau composite (2) comprenant au moins deux couches superposées (3, 5), à savoir une première couche (3) constituée d'une juxtaposition de sphères creuses (4) destinée à être appliquée et fixée, directement ou indirectement, à la surface (10) de la pièce (1) à protéger, et une seconde couche (5), recouvrant la première (3), et constituée d'une paroi réalisée dans un matériau ayant des propriétés de déformation plastique sous l'effet d'un impact, qui permet de transformer l'énergie du choc en une déformation locale, dont l'expertise simple de la profondeur de la zone impactée permet de conclure à la dégradation ou non du substrat sous la zone d'impact.

2. Peau amortissante selon la revendication 1, **caractérisée en ce que** la première couche (3) est constituée de la superposition de plusieurs couches (30, 31), chacune constituée de la juxtaposition de sphères creuses (4), chacune de ces couches (30, 31) de sphères creuses (4) étant ou non séparées de la ou des autres couches de sphères creuses par une paroi intermédiaire (32).

3. Peau amortissante selon la revendication 1 ou la revendication 2, **caractérisé en ce que** la première couche de la peau amortissante est fixée indirectement sur la pièce à protéger (1), par l'intermédiaire d'une troisième couche (6), sur un côté de laquelle est fixée la première couche (3) constituée de sphères creuses (4), tandis que son autre côté comporte des moyens de solidarisation permettant sa fixation, et donc celle de la peau amortissante, sur la surface à protéger (10), lesdits moyens de solidarisation étant susceptibles d'être réversibles pour assurer une fixation temporaire.

4. Peau amortissante selon l'une quelconque des revendications précédentes, **caractérisée en ce que** les sphères creuses (4) sont réalisées en métal ou en matières synthétiques ou minérales.

5. Peau amortissante selon l'une quelconque des revendications précédentes, **caractérisée en ce que** les sphères creuses (4) sont d'un diamètre variant de 1 à 6 mm, et **en ce que** pour une même peau, elles ne sont pas toutes de même diamètre.

6. Peau amortissante selon l'une quelconque des revendications précédentes, **caractérisée en ce que** la paroi (5), ou les parois (32) le cas échéant, réalisée dans un matériau ayant des propriétés de déformation plastique, consiste en une nappe faite d'un tissu composite, ou en plusieurs tissus composites stratifiés entre eux.

7. Peau amortissante selon la revendication 6, **caractérisée en ce que** le ou les tissus consistent en un polymère d'aramide.

8. Peau amortissante selon la revendication 6, **caractérisée en ce que** le ou les tissus consistent en un matériau composite incorporant des composants qui lui confèrent des propriétés particulières d'isolation et/ou de conductibilité.

9. Peau amortissante selon l'une quelconque des revendications précédentes, **caractérisée en ce que** les sphères creuses (4) sont assemblées par collage entre elles et/ou à la ou les parois ou surface avec la ou lesquelles elles sont en contact.

10. Peau amortissante selon la revendication 9, **caractérisée en ce que** les sphères (4) sont assemblées au moyen d'une résine (33), telle qu'une résine structurale polymérisée, laquelle résine est utilisée en quantité contrôlée en sorte que son utilisation soit limitée aux points de contact des sphères entre-elles et/ou avec la ou les parois ou surface avec la ou lesquelles elles sont en contact.

11. Peau amortissante selon l'une quelconque des revendications précédentes, **caractérisée en ce que** l'espace (E) qui demeure entre les sphères creuses (4) est comblé au moyen d'un matériau compressible, d'une résistance à la compression inférieure à celle des sphères creuses (4) qu'il enserre.

12. Peau amortissante selon l'une quelconque des revendications précédentes, **caractérisée en ce qu'**elle présente des zones de différentes épaisseurs, ces variations d'épaisseur étant fonction du degré d'exposition à des impacts des parties de la pièce que ces zones doivent recouvrir.

## Patentansprüche

1. Dämpfungshülle zum Schutz von Verbundteilen, **dadurch gekennzeichnet, dass** sie aus einem Verbundmaterial (2) besteht, das mindestens zwei übereinander liegende Schichten (3, 5) umfasst, nämlich eine erste Schicht (3), die aus einer Aneinanderreihung von Hohlkugeln (4) besteht und dazu bestimmt ist, direkt oder indirekt an der Oberfläche (10) des zu schützenden Teils (1) aufgebracht und befestigt zu werden, und eine zweite Schicht (5), die die erste Schicht (3) bedeckt und aus einer Wand besteht, die aus einem Material mit plastischen Verformungseigenschaften gefertigt ist.

2. Dämpfungshülle nach Anspruch 1, **dadurch gekennzeichnet, dass** die erste Schicht (3) aus der Überlagerung mehrerer Schichten (30, 31) besteht, die jeweils aus der Aneinanderreihung von Hohlkugeln (4) bestehen, wobei jede dieser Schichten (30, 31) von Hohlkugeln (4) durch eine Zwischenwand (32) von der bzw. den anderen Schichten von Hohlkugeln getrennt ist oder nicht.

3. Dämpfungshülle nach Anspruch 1 oder Anspruch 2, **dadurch gekennzeichnet, dass** die erste Schicht der Dämpfungshülle indirekt über eine dritte Schicht (6), an deren einer Seite die aus Hohlkugeln (4) bestehende erste Schicht (3) befestigt ist, an dem zu schützenden Teil (1) befestigt ist, während ihre andere Seite feste Verbindungsmittel umfasst, die ihre Befestigung und also diejenige der Dämpfungshülle an der zu schützenden Oberfläche (10) ernöglichen, wobei die besagten Befestigungsmittel reversibel sein können, um eine vorübergehende Befestigung zu sichern.

4. Dämpfungshülle nach irgendeinem der vorhergehenden Ansprüche, **dadurch gekennzeichnet, dass** die Hohlkugeln (4) aus Metall oder Kunst- oder Mineralstoffen gefertigt sind.

5. Dämpfungshülle nach irgendeinem der vorhergehenden Ansprüche, **dadurch gekennzeichnet, dass** die Hohlkugeln (4) einen Durchmesser von 1 bis 6 mm haben, und dass sie für dieselbe Hülle nicht alle den gleichen Durchmesser haben.

6. Dämpfungshülle nach irgendeinem der vorhergehenden Ansprüche, **dadurch gekennzeichnet, dass** die Wand (5), bzw. gegebenenfalls die Wände (32), die aus einem Material mit plastischen Verformungseigenschaften besteht, aus einer Bahn aus einem Verbundgtewebe oder aus mehreren zu einander laminierten Verbundgeweben besteht.

7. Dämpfungshülle nach Anspruch 6, **dadurch gekennzeichnet, dass** das Gewebe bzw. die Gewebe aus einem Aramidpolymer bestehen.

8. Dämpfungshülle nach Anspruch 6, **dadurch gekennzeichnet, dass** das Gewebe bzw. die Gewebe aus einem Verbundmaterial bestehen, in dem Komponenten eingebunden sind, die ihm besondere Isolier- und/oder Leitfähigkeitseigenschaften verleihen.

9. Dämpfungshülle nach irgendeinem der vorhergehenden Ansprüche, **dadurch gekennzeichnet, dass** die Hohlkugeln (4) durch Kleben mit einander und/oder mit der bzw. den Wänden oder Oberflächen, mit denen sie in Kontakt stehen, verbunden werden.

10. Dämpfungshülle nach Anspruch 9, **dadurch gekennzeichnet, dass** die Kugeln (4) mittels eines Harzes (33), wie eines polymerisierten Strukturharzes, verbunden werden, wobei das Harz in einer kontrollierten Menge verwendet wird, so dass seine Verwendung auf die Kontaktpunkte der Kugeln mit einander und/oder mit der bzw. den Wänden oder Oberflächen, mit denen sie in Kontakt stehen, beschränkt ist.

11. Dämpfungshülle nach irgendeinem der vorhergehenden Ansprüche, **dadurch gekennzeichnet, dass** der Raum (E), der zwischen den Hohlkugeln (4) verbleibt, mittels eines kompressiblen Materials gefüllt wird, dessen Druckfestigkeit geringer ist als diejenige der Hohlkugeln (4), welche er umschließt.

12. Dämpfungshülle nach irgendeinem der vorhergehenden Ansprüche, **dadurch gekennzeichnet, dass** sie Bereiche unterschiedlicher Dicke aufweist, wobei diese Dickenänderungen von dem Ausmaß der Aussetzung zu Stößen der Portionen des Teils, welche diese Bereiche bedecken müssen, abhängig sind.

## Claims

1. Damping skin for protecting composite parts, wherein it consists of a composite material (2) comprising at least two superposed layers (3, 5), i.e. a first layer (3) consisting of a juxtaposition of hollow spheres (4) designed to be applied and fixed, directly or indirectly, to the surface (10) of the part (1) to be protected, and a second layer (5), covering the first one (3), and consisting of a wall made of a material having plastic deformation properties.

2. Damping skin according to claim 1, wherein the first layer (3) consists of the superposition of several layers (30, 31), each consisting of the juxtaposition of hollow spheres (4), each of said layers (30, 31) of hollow spheres (4) being or not separated from the other layer or layers of hollow spheres by an intermediate wall (32).

3. Damping skin according to claim 1 or claim 2, wherein the first layer of the damping skin is fixed indirectly on the part to be protected (1), by means of a third layer (6), on one side of which is fixed the first layer (3) consisting of hollow spheres (4), whereas its other side comprises integral connection means permitting its fastening, and therefore that of the damping skin, on the surface to be protected (10), said integral connection means being capable of being reversible to ensure a temporary fastening.

4. Damping skin according to any of the preceding claims, wherein the hollow spheres (4) are made of metal or of synthetic materials or of minerals.

5. Damping skin according to any of the preceding claims, wherein the hollow spheres (4) are of a diameter varying between 1 and 6 mm, and that for one and the same skin, they are not all of the same diameter.

6. Damping skin according to any of the preceding claims, wherein the wall (5), or the walls (32) if need be, made of a material having plastic deformation properties, consists of a sheet made of a composite tissue, or of several composite tissues stratified between them.

7. Damping skin according to claim 6, wherein the tissue or tissues consist of an aramid polymer.

8. Damping skin according to claim 6, wherein the tissue or tissues consist of a composite material incorporating components that give it specific insulation and/or conductivity properties.

9. Damping skin according to any of the preceding claims, wherein the hollow spheres (4) are assembled by gluing between each other and/or to the wall or walls or surface, which they are into contact with.

10. Damping skin according to claim 9, wherein the spheres (4) are assembled by means of a resin (33), such as a polymerized structural resin, which resin is used in controlled quantities so that its use is limited to the points of contact of the spheres between each other and/or with the wall or walls or surface with which they are in contact.

11. Damping skin according to any of the preceding claims, wherein the space (E) that remains between the hollow spheres (4) is filled with a compressible material, with a compression resistance that is lower than that of the hollow spheres (4) it encloses.

12. Damping skin according to any of the preceding claims, wherein it has areas of different thickness, these thickness variations depending on the degree of exposure to impacts of the portions of the part these areas should cover.
